(19) **Europäisches Patentamt / European Patent Office / Office européen des brevets**

(11) **EP 4 522 928 B1**

(12) **FASCICULE DE BREVET EUROPEEN**

(45) Date de publication et mention de la délivrance du brevet:
**20.05.2026 Bulletin 2026/21**

(21) Numéro de dépôt: **23716893.5**

(22) Date de dépôt: **05.04.2023**

(51) Classification Internationale des Brevets (IPC):

| | |
|---|---|
| *F25B 9/14 (2006.01)* | *B32B 7/00 (2019.01)* |
| *B60C 23/18 (2006.01)* | *F28D 15/00 (2006.01)* |
| *A43B 7/00 (2006.01)* | *F24F 5/00 (2006.01)* |
| *F04B 43/12 (2006.01)* | *F04B 53/08 (2006.01)* |
| *B32B 3/26 (2006.01)* | *A43B 13/00 (2006.01)* |
| *B32B 3/28 (2006.01)* | *B32B 25/04 (2006.01)* |
| *B32B 27/08 (2006.01)* | *B32B 27/28 (2006.01)* |
| *F04B 43/02 (2006.01)* | *A43B 7/06 (2006.01)* |
| *A43B 13/20 (2006.01)* | *A43B 13/14 (2006.01)* |

(52) Classification Coopérative des Brevets (CPC):
**F25B 9/14; A43B 7/005; A43B 7/06; A43B 13/14; A43B 13/206; B32B 3/266; B32B 3/28; B32B 25/042; B32B 27/08; B32B 27/283; B60C 23/18; F04B 43/02;** B32B 2437/02

(86) Numéro de dépôt international:
**PCT/EP2023/058974**

(87) Numéro de publication internationale:
**WO 2023/194455 (12.10.2023 Gazette 2023/41)**

(54) **MATÉRIAU SOUPLE ET ÉLASTIQUE COMPORTANT UNE COUCHE MUNIE D'ALVÉOLES**

FLEXIBLES UND ELASTISCHES MATERIAL MIT EINER MIT ZELLKAMMERN VERSEHENEN SCHICHT

FLEXIBLE AND ELASTIC MATERIAL COMPRISING A LAYER PROVIDED WITH CELL CHAMBERS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.04.2022 FR 2203272**

(43) Date de publication de la demande:
**19.03.2025 Bulletin 2025/12**

(73) Titulaire: **Aubert, Bruno**
**66650 Banyuls sur Mer (FR)**

(72) Inventeur: **Aubert, Bruno**
**66650 Banyuls sur Mer (FR)**

(74) Mandataire: **Rhein, Alain**
**Cabinet BREV & SUD**
**55 Avenue Clément Ader**
**34170 Castelnau-le-Lez (FR)**

(56) Documents cités:
WO-A1-2020/064509     CN-A- 113 147 255
CN-U- 214 221 458      GB-A- 181 707
JP-U- H04 106 413      US-A1- 2012 023 664

**Description**

La présente invention concerne un matériau souple et élastique comportant une couche munie d'alvéoles, utilisable pour un procédé pour produire de la chaleur et de la fraîcheur dans un matériau souple comprenant des alvéoles étanches remplies de gaz, par compression et détente du gaz emprisonné dans ses alvéoles.

L'application préférentielle étant les semelles de chaussures pour maintenir une température fraiche au pied même en marchant sur une route très chaude ou une température chaude sur un sol gelé.

**Art antérieur**

S'il existe des dispositifs pour réchauffer les pieds comme par exemple des semelles ou des chaussettes avec des résistances électriques alimentées par des batteries ou des produits chimiques exothermiques, aucun de ces systèmes ne permet de maintenir un apport de chaleur pour un temps suffisant à bon nombre d'activités comme par exemple, pendant 8h ou plus pour les travailleurs dans les entrepôts frigorifiques, les trailers extrêmes, les militaires...

D'autre part, il existe peu de dispositifs permettant de rafraichir des semelles de chaussures. Il existe bien des dispositifs de semelles remplies d'un gel que l'on place préalablement dans un congélateur afin d'emmagasiner du froid mais ce genre de dispositif est peu pratique car d'une part le froid est intense au départ, au risque de créer des brûlures, puis devient rapidement moins efficace et d'autre part, la durée de maintien du froid est très courte (quelques minutes à dizaines de minutes) et donc pas adapté à des journées de travail ou des séances de jogging d'une heure ou plus.

Il y a bien des dispositifs qui revendiquent l'utilisation de composants à effet Peltier comme dans les demandes de brevets KR20160066190, US2012018418 ou WO2005087031. Mais ces dispositifs nécessitent une alimentation électrique significative car les rendements des composants à effet Peltier ne sont pas très bons. Ainsi, la fourniture d'une réfrigération ne sera pas possible pendant des périodes de plus d'une heure à cause de l'épuisement rapide des batteries. De surcroît, ces composants à effet Peltier sont en général en céramique et sont donc très fragiles. Enfin, entre le poids des composants et des batteries, cela devient vite trop lourd dans des chaussures de sport qui généralement gagnent à être légères.

Il y a aussi des dispositifs qui utilisent des matériaux respirants pour évacuer l'eau, comme cela est décrit dans le brevet US2018220739 ou des matériaux poreux pour une meilleure ventilation comme dans le brevet CN107788617 mais aucun de ces systèmes ne permet une véritable régulation thermique et un fort abaissement ou élévation de température.

Il existe aussi des procédés de ventilation d'un matériau (en l'occurrence d'une chaussure) à partir de l'air extérieur, comme décrit dans la demande FR2958505A1, mais ce n'est absolument pas un procédé de rafraichissement ou de chauffage : c'est uniquement un procédé de ventilation d'un matériau à partir de l'air extérieur. Ainsi, si l'air extérieur est très chaud comme en été en Inde (51°C) par exemple, ce sera de l'air à 51°C qui rentrera dans la chaussure ! On est loin d'une thermorégulation. En effet, la demande FR2958505A1 décrit et revendique une chaussure, certes avec une poche (grosse alvéole) mais celle-ci est en communication avec l'extérieur et l'intérieur de la chaussure et donc absolument pas étanche (la communication avec l'extérieur y est d'ailleurs revendiquée). Ceci est conforté par le fait aussi qu'il n'y est jamais décrit ni revendiqué que l'air est mis en pression comme dans notre présente demande pour mettre en œuvre les principes de la thermodynamique et notamment le chauffage de l'air grâce à sa mise en pression.

Dans la demande FR1501793A il n'est pas non plus possible de comprimer et décomprimer l'air des alvéoles. Au contraire, il y est décrit et revendiqué une semelle dotée de moyens d'aération car les alvéoles, comme cela est précisé plusieurs fois, sont ouvertes et ne pourraient absolument pas garder la pression d'air due au poids de la personne. De surcroît il est précisé que ces alvéoles contiennent une poudre pour être dispersées sur les pieds et donc que le caractère non étanche y est fondamental.

Ainsi, dans les demandes FR2958505A1 et FR1501793A, cela serait impossible de réchauffer ou rafraichir indépendamment de l'air extérieur car il y est décrit un procédé de ventilation d'un matériau à partir de l'air extérieur et donc, si l'air extérieur est très chaud comme actuellement en Inde (51°C), ce sera de l'air à 51°C qui rentrera dans la chaussure ! et il serait impossible de rafraichir le pied avec un air si chaud. De même, si l'air extérieur est très froid comme en hiver (-30°C en montagne, au Canada...), ce sera de l'air à -30°C qui rentrera dans la chaussure ! et il serait impossible de réchauffer le pied avec un air si froid.

Seul un procédé qui utilise les principes de la thermodynamique comme nous le revendiquons dans notre présente demande peut produire réellement des calories et des frigories et est capable d'apporter une véritable fraicheur par temps de canicule ou chaleur par temps froid pendant une longue durée (tant que l'on marche ou coure).

La demande FR 1871095 mentionne bien un procédé thermodynamique mais sa mise en pratique était difficile car les alvéoles étaient en creux dans le matériau rendant difficile la compression et de nombreuses autres innovations, comme on va le décrire, ont dues être apportées pour le rendre plus efficace. La présente demande concerne donc un brevet d'amélioration dépendant de la demande FR 1871095.

Le document WO 2020/064509 A1 montre un matériau souple et élastique comportant une couche munie d'alvéoles dite froides compressible et une couche munie d'alvéoles dites chaudes moins compressibles que les précédentes, les alvéoles dites froides ayant une géométrie ou une dureté permettant une compression supérieure à celle d'alvéoles dites chaudes, lesquelles ayant une géométrie ou une dureté permettant de ne pas être ou peu être comprimées lors de la compression de l'alvéole dite froide.

Descriptif de l'invention :

L'invention est définie par l'objet de la revendication indépendante 1 annexée.

La compression mécanique du matériau souple entraine ainsi la compression et donc l'échauffement du gaz des alvéoles de la couche froide vers les alvéoles de la couche chaude via les tuyères.

Lors de la décompression mécanique, grâce à l'élasticité du dit matériau, le même gaz se détend et donc refroidit via lesdites tuyères vers les alvéoles de la couche froide.

Afin d'optimiser la phase de détente du gaz lors de la décompression mécanique, les tuyères peuvent avoir une forme convergente ou divergente, avec une forme arrondie, elliptique ou par exemple les tuyères de Laval.

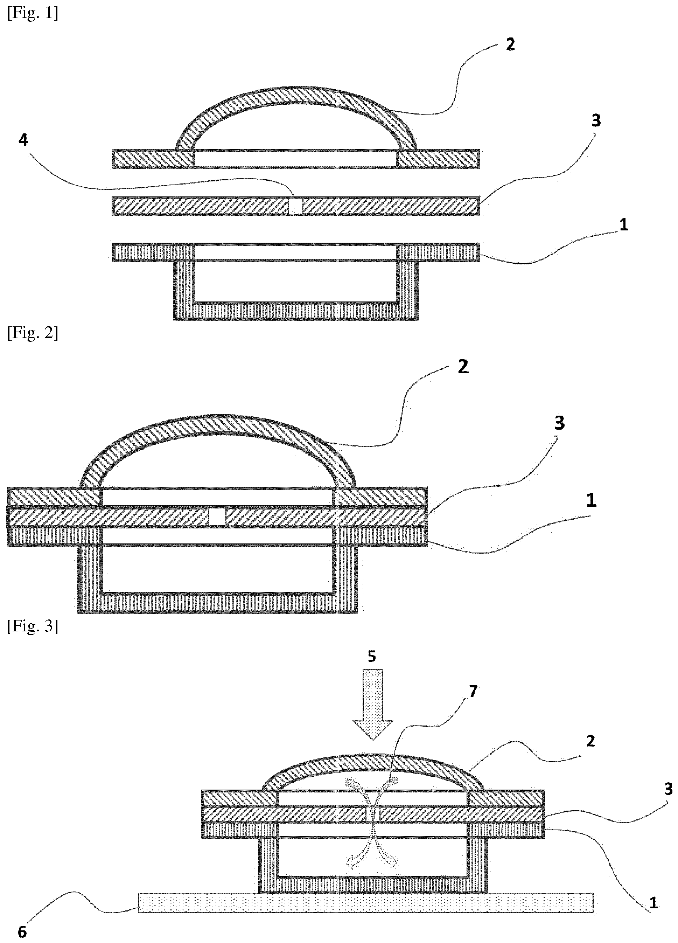

[Fig.1] montre une alvéole avant assemblage avec la couche chaude (1), zone de réception de l'air comprimé, la couche froide (2), zone de détente de l'air après compression, et la couche intermédiaire (3), contenant les tuyères (4).

Ces trois couches sont superposées de manière à ce que chaque alvéole dite froide soit en communication avec une alvéole dite chaude via une des tuyères comme montré dans [Fig.2].

Les trois couches peuvent être assemblées, pour être étanches, à pression atmosphérique ou sous pression afin que les alvéoles soient remplies de gaz sous pression ou non.

L'étanchéité est une caractéristique très importante. En effet, si l'on utilise un matériau présentant une perméabilité aux gaz, comme l'air, supérieure à 20 Barrer, les cycles de compression/détente amèneront une fuite d'air lente mais progressive, conduisant à un écrasement permanent des alvéoles limitant ainsi le fonctionnement thermodynamique. La production de chaleur et de froid ne sera alors effective que pendant 1 à 2 heures. Pour assurer une production thermodynamique de 8 heures par exemple (une journée de travail), une perméabilité inférieure à 4 Barrer est suffisante et pour un fonctionnement supérieur à 40h (pour les trails extrêmes par exemple) une perméabilité inférieure à 1 Barrer sera nécessaire.

Pour que les alvéoles dites chaudes ne puissent pas être ou être peu comprimées lors de la compression mécanique de l'alvéole dite froide, cela peut être réalisé soit avec une géométrie particulière comme préférentiellement l'adjonction de renforts à l'intérieur des alvéoles ou une augmentation de l'épaisseur des parois des alvéoles soit avec une dureté supérieure à celle des alvéoles dites froides.

Dans le cas où les alvéoles dites chaudes ont une dureté qui leur permette de ne pas être ou peu comprimées lors de la compression mécanique de l'alvéole dite froide, cette dureté sera supérieure d'au moins 10 Shore A, à celle de ces dernières.

Le matériau souple peut ainsi être utilisé comme semelle dans les chaussures afin de maintenir une température fraiche lorsque la personne court sur un sol brulant par exemple. Lors de chaque pas, le pied va compresser les alvéoles dites froides et le gaz de ces alvéoles va être poussé via les tuyères vers les alvéoles dites chaudes qui vont donc agir comme des enceintes adiabatiques dont le gaz en se comprimant va s'échauffer.

Lorsque le pied quitte le sol et donc qu'il n'y a plus de compression mécanique, le matériau souple va reprendre son volume par le jeu de l'élasticité du matériau et aspirer le gaz au travers des tuyères ce qui va détendre le gaz et donc le refroidir.

Les valeurs de dureté employée pour les alvéoles dites froides sont de 10 à 30 Shore A et de 20 à 50 Shore pour les alvéoles dites chaudes. A noter que si les 2 couches avaient la même dureté, le gaz comprimé par la pression du pied serait réparti de façon égale entre les alvéoles incomplètement comprimées des 2 couches, l'échauffement serait uniformément réparti et donc lors de la détente, la thermodynamique nous enseigne que la température reviendrait à sa valeur initiale et donc que l'on ne pourrait pas obtenir une face chaude et une face froide.

Ainsi c'est grâce à une différenciation de la compressibilité des 2 types d'alvéoles, soit avec une différence de dureté des 2 couches, soit par une différence de forme, que les alvéoles dites froides se déforment par la pression du pied afin que tout le gaz comprimé aille dans les alvéoles dites chaudes qui, elles, ne se déforment pratiquement pas. Le gaz comprimé est donc chauffé naturellement par les lois de la thermodynamique, et se retrouve entièrement dans les alvéoles dites chaudes qui se retrouve ainsi à une température plus élevée que les alvéoles dites froides.

Les élastomères comme le silicone par exemple ne présentent pas une conductibilité importante. Ainsi, les alvéoles risquent de ne pas transmettre suffisamment la chaleur ou le froid aux pieds et les alvéoles fonctionneront plutôt comme une enceinte adiabatique sans échange avec l'extérieur. Il est donc préférable d'augmenter la conductibilité thermique dans les couche chaudes et froides par l'adjonction d'un métal en poudre (cuivre par exemple) ou de poudre de diamant dans l'élastomère mais pas dans la partie intermédiaire contenant les tuyères afin d'assurer une isolation thermique et de bien séparer les flux de chaleur.

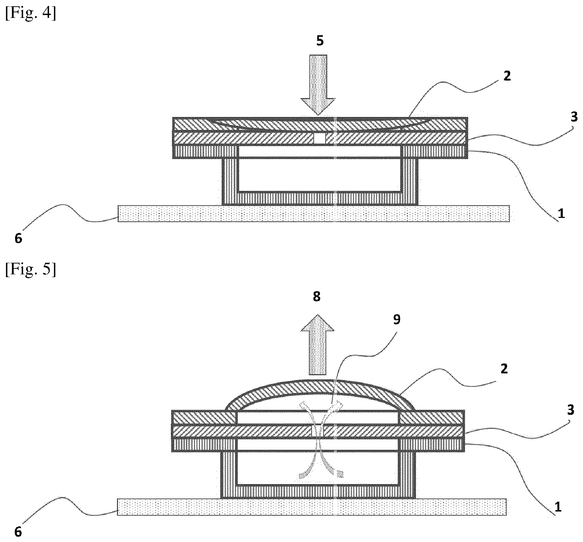

[Fig.2] à [Fig.5] montrent en coupes le dispositif destiné par exemple à être disposé comme une semelle dans des chaussures avec alvéoles dites froides au contact du pied. Exemple de fonctionnement avec de l'air :

[Fig.2], le matériau souple alvéolaire est au repos et le gaz est uniformément réparti dans les alvéoles à la température Ta et à la pression Pa. On distingue les deux types d'alvéoles et la tuyère.

[Fig.3], une pression, comme par exemple l'appui d'un pied représenté par une flèche (5), sur le sol (6), est exercée sur le matériau souple et comme les alvéoles dites froides sont plus compressibles que celles dites chaudes, tout l'air (7) va dans ces dernières.

[Fig.4], le gaz sera alors comprimé à la pression Pi (dépendant de la pression exercée, soit 2 bars environ pour des alvéoles équi-volumiques) et va donc s'échauffer à la température Ti suivant les lois de la thermodynamique. La température Ti du gaz sera donc égale à :

[Math.1]

$$Ta \times (Pi/Pa)^{(\gamma-1)/\gamma}$$

où γ est la constante adiabatique du gaz (1.4 pour l'air à 293°K), soit 376°K si Ta est de 293°K. La chaleur du gaz va alors se dissiper dans le matériau vers le pied ou le sol (ou chaussure).

[Fig.5] montre le matériau pendant que la pression est relâchée (lorsque le pied quitte le sol). L'élasticité du matériau fait reprendre leurs formes aux alvéoles, force représentée par une flèche (8). Le gaz sous pression, à la température Tf, va quitter les alvéoles dites chaudes pour se détendre dans les alvéoles dites froides via les tuyères et ainsi se refroidir pour atteindre la température Tc :

[Math.2]

$$Tf \times (Pa/Pi)^{(\gamma-1)/\gamma}$$

soit 285°K c'est-à-dire une température plus basse de 8°K par rapport à la température initiale Ta.

C'est réellement un procédé thermodynamique pour faire du froid et du chaud dans une semelle qui est revendiqué à l'image de ce qui se passe dans un climatiseur utilisant le cycle de Carnot (compression/détente) dans les alvéoles dites chaudes (zone de compression), les alvéoles dites froides (zone de détente)) et un compresseur (le pied). Le caractère innovant résidant dans le fait que ce cycle est réalisé dans un matériau souple apte à être compressé et à revenir à sa forme initiale grâce à son élasticité.

Suivant une autre disposition, le matériau souple peut être utilisé comme moyen de chauffage. Il suffit pour cela d'inverser la semelle et donc que ce soit les alvéoles dites chaudes qui soient au contact du pied.

Ainsi, la chaleur générée lors de la compression sera au contact du pied alors que la couche froide sera en contact avec le fond de la chaussure.

Le caractère souple, élastique ou hyperélastique (et donc grandement déformable) du matériau est fondamental pour que le poids d'une personne puisse déformer ledit matériau souple mais également qu'après relâchement de la pression, le matériau retrouve le plus vite possible sa forme initiale.

Les alvéoles peuvent donc être dimensionnées en fonction du poids des personnes et de la taille de chaussure pour que la pression soit suffisante pour bien comprimer les alvéoles dites froides.

De façon préférentielle, les alvéoles doivent être en relief pour qu'il n'y ait le moins de matière possible tout autour (des alvéoles en creux dans le matériau sont beaucoup plus difficiles à comprimer par un pied).

Le rapport des volumes des alvéoles dites froides et chaudes a aussi son importance. En effet, si elles ont le même volume, lors de la compression mécanique complète de l'alvéole froide tout le gaz dans l'alvéole chaude sera à une pression de 2 bars ce qui correspond à une élévation de température de l'air de 83°C environ.

Par contre, si l'alvéole dite froide présente un volume double de celui de l'alvéole chaude, la pression obtenue lors de la compression sera de 3 bars et l'élévation de température de l'air sera de 120°C environ ce qui permettra un meilleur chauffage du pied.

Le gaz contenu dans les alvéoles peut être tout simplement de l'air, mais on peut avantageusement prendre des gaz ayant une constante adiabatique γ plus élevée tel qu'un gaz monoatomique (Argon par exemple) ou polyatomique ($CO_2$ par exemple) avec en plus éventuellement une humidité supérieure à 20% (pour utiliser la chaleur latente de vaporisation de l'eau) afin d'obtenir un rendement plus élevé.

Suivant une autre des dispositions préférées, le matériau et la forme des alvéoles peuvent être adaptés à la morphologie des animaux domestiques comme les chats et les chiens qui se brûlent souvent les coussinets lorsqu'ils se déplacent sur une route en plein soleil. C'est notamment le cas des chiens de sauveteurs.

Suivant une autre disposition, le matériau souple alvéolaire peut être utilisé comme tapis dans les établissements recevant du public ou les entreprises avec beaucoup de passage afin que les nombreuses pressions des pieds apportent une thermorégulation.

Suivant une autre disposition, le matériau souple alvéolaire peut être utilisé dans les pneumatiques pour permettre un refroidissement en continu. C'est d'autant plus intéressant que les voitures électriques amenées à remplacer les voitures thermiques sont plus lourdes et plus coupleuse et donc sujettes à un échauffement plus facile des pneus.

Dans ce cas, les alvéoles de la couche chaude seront avantageusement regroupées pour former la chambre proprement dite du pneu et les alvéoles de la couche froide seront disposées en périphérie du pneu où elles subiront les cycles de compression détente lorsque la voiture roule. Par contre, dans ce cas, il est préférable que les alvéoles soient en creux car la pression exercée par la voiture est beaucoup plus importante que celle d'un pied.

Suivant une autre disposition, le matériau souple alvéolaire peut être utilisé dans les pompes péristaltiques. Il suffit pour cela de disposer les alvéoles autour du tuyau en matériau élastique qui assure le transport et ainsi de refroidir ou de réchauffer le fluide ainsi pompé.

## Revendications

**1.** Matériau souple et élastique comportant une couche munie d'alvéoles dite froides compressible (2) et une couche munie d'alvéoles dites chaudes moins compressibles que les précédentes (1), les alvéoles dites froides ayant une géométrie ou une dureté permettant une compression supérieure à celle d'alvéoles dites chaudes, lesquelles ayant une géométrie ou une dureté permettant de ne pas être ou peu comprimées lors de la compression de l'alvéole dite froide, **caractérisé en ce qu'**il comporte :
une couche intermédiaire disposée entre les 2 précédentes couches et comprenant des tuyères (1) de géométrie adaptée à une bonne détente du gaz,

* et que lesdites alvéoles sont en relief pour permettre une compression mécanique et un retour à la forme initiale plus faciles.
* et que les 3 couches sont assemblées de manière étanche de façon à ce que chaque alvéole dite froide (2) soit en communication avec une alvéole dite chaude (1) via une les dites tuyères et que toutes les alvéoles soient remplies du gaz environnant lors de l'assemblage. ,

**2.** Matériau souple et élastique suivant la revendication 1, **caractérisé en ce qu'**il comporte une couche chaude (1) et une couche froide (2) présentant une conductibilité thermique augmentée par l'ajout de poudre à haute conductibilité thermique dans ledit matériau et une couche intermédiaire (3) munie de tuyères présentant une faible conductibilité.

**3.** Matériau souple et élastique suivant la revendication 1 ou 2 **caractérisé en ce que** le dit matériau possède des alvéoles (1) et (2), étanches contenant de l'air, du CO2 ou de l'argon.

**4.** Matériau souple et élastique suivant l'une des revendications précédentes **caractérisé en ce que** le dit matériau possède des alvéoles (1) et (2), étanches contenant de l'air, du CO2 ou de l'argon humides.

**5.** Matériau souple et élastique suivant l'une des revendications précédentes, **caractérisé en ce qu'**il est constitutif d'une semelle de chaussure

**6.** Matériau souple et élastique selon l'une quelconque des revendications 1 à 4, **caractérisé en ce qu'**il est constitutif d'un tapis de sol

**7.** Matériau souple et élastique selon l'une quelconque des revendications 1 à 4, **caractérisé en ce qu'**il est constitutif d'un tuyau souple de pompe péristaltique

**8.** Matériau souple et élastique selon l'une quelconque des revendications 1 à 4, **caractérisé en ce qu'**il est constitutif d'un pneumatique pour véhicule

## Patentansprüche

**1.** Weiches und elastisches Material mit einer Schicht mit sogenannten kalten komprimierbaren Alveolen (2) und einer Schicht mit sogenannten warmen Alveolen, die weniger komprimierbar sind als die vorhergehenden (1), wobei die sogenannten kalten Alveolen eine Geometrie oder eine Härte aufweisen, die eine größere Kompression ermöglicht als die der sogenannten warmen Alveolen, welche eine Geometrie oder eine Härte aufweisen, die es ermöglicht, bei der Kompression der sogenannten kalten Alveole nicht oder wenig komprimiert zu werden, **durch gekennzeichnet, dass** es Folgendes aufweist:
eine Zwischenschicht, die zwischen den 2 vorhergehenden Schichten angeordnet ist und Düsen (1) mit einer Geometrie umfasst, die für eine gute Entspannung des Gases geeignet ist,

* **und dadurch, dass** die besagten Alveolen erhaben sind, um eine mechanische Kompression und eine Rückkehr zur ursprünglichen Form zu erleichtern,
* **und dadurch, dass** die 3 Schichten dicht zusammengefügt sind, so dass jede sogenannte kalte Alveole (2) mit einer sogenannten warmen Alveole (1) über eine der genannten Düsen in Verbindung steht und dass alle Alveolen beim Zusammenfügen mit dem Umgebungsgas gefüllt sind.

**2.** Weiches und elastisches Material nach Anspruch 1, **dadurch gekennzeichnet, dass** es eine warme Schicht (1) und eine kalte Schicht (2) umfasst, die eine durch die Zugabe von Pulver mit hoher Wärmeleitfähigkeit in das besagte Material erhöhte Wärmeleitfähigkeit aufweisen, und eine Zwischenschicht (3), die mit Düsen versehen ist, welche eine geringe Leitfähigkeit aufweisen.

**3.** Weiches und elastisches Material nach Anspruch 1 oder 2,
**dadurch gekennzeichnet, dass** das besagte Material dichte Alveolen (1) und (2) aufweist, die Luft, CO2 oder Argon enthalten.

4. Weiches und elastisches Material nach einem der vorstehenden Ansprüche, **dadurch gekennzeichnet, dass** das besagte Material dichte Alveolen (1) und (2) aufweist, die feuchte Luft, CO2 oder Argon enthalten.

5. Weiches und elastisches Material nach einem der vorstehenden Ansprüche, **dadurch gekennzeichnet, dass** es eine Schuhsohle bildet.

6. Weiches und elastisches Material nach einem der Ansprüche 1 bis 4, **dadurch gekennzeichnet, dass** es einen Bodenbelag bildet.

7. Weiches und elastisches Material nach einem der Ansprüche 1 bis 4, **dadurch gekennzeichnet, dass** es einen flexiblen Schlauch einer peristaltischen Pumpe bildet.

8. Weiches und elastisches Material nach einem der Ansprüche 1 bis 4, **dadurch gekennzeichnet, dass** es einen Reifen für ein Fahrzeug bildet.

## Claims

1. Flexible and elastic material comprising a layer provided with compressible so-called cold cells (2) and a layer provided with so-called hot cells (1) less compressible than the former, the so-called cold cells having a geometry or a hardness permitting greater compression than that of the so-called hot cells, which have a geometry or a hardness permitting little or no compression during compression of the so-called cold cell, **characterized in that** it comprises:
an intermediate layer located between the 2 previous layers and comprising nozzles (1) with a geometry suitable for good gas expansion,

   * **and in that** said cells are raised to facilitate mechanical compression and return to the initial shape.
   * **and in that** the 3 layers are assembled in a sealed manner so that each so-called cold cell (2) is in communication with a so-called hot cell (1) via one of the said nozzles and that all the cells are filled with the surrounding gas during assembly.

2. The flexible and elastic material according to claim 1, **characterized in that** it comprises a hot layer (1) and a cold layer (2) having a thermal conductivity increased by the addition of powder with high thermal conductivity in said material and an intermediate layer (3) provided with nozzles having a low conductivity.

3. The flexible and elastic material according to claim 1 or 2, **characterized in that** said material has sealed cells (1) and (2) containing air, CO2 or argon.

4. The flexible and elastic material according to any of the preceding claims **characterized in that** said material has sealed cells (1) and (2) containing moist air, CO2 or argon.

5. The flexible and elastic material according to any of the preceding claims, **characterized in that** it forms part of a shoe sole

6. The flexible and elastic material according to any of claims 1 to 4, **characterized in that** it forms part of a floor mat

7. The flexible and elastic material according to any of claims 1 to 4, **characterized in that** it forms part of a flexible hose for a peristaltic pump

8. The flexible and elastic material according to any of claims 1 to 4, **characterized in that** it forms part of a vehicle tire

[Fig. 1]

[Fig. 2]

[Fig. 3]

[Fig. 4]

[Fig. 5]

**EP 4 522 928 B1**

RÉFÉRENCES CITÉES DANS LA DESCRIPTION

**Documents brevets cités dans la description**

- KR 20160066190
- US 2012018418 A
- WO 2005087031 A
- US 2018220739 A
- CN 107788617
- FR 2958505 A1
- FR 1501793 A
- FR 1871095
- WO 2020064509 A1